# EUROPEAN PATENT APPLICATION

(11) **EP 4 360 897 A1**
(43) Date of publication of application: **01.05.2024**
(21) Application number: 23205821.4
(22) Date of filing: 25.10.2023
(51) Int. Cl.: B41M 7/00, B41J 11/00, B32B 38/00

(54) **METHOD AND UNIT FOR MANUFACTURING A LAMINATED PACKAGING MATERIAL WEB**

(30) Priority: 28.10.2022 EP 22204555
(71) Applicant: Tetra Laval Holdings & Finance S.A., 1009 Pully (CH)
(72) Inventor: OLSSON, Sverker, 221 86 Lund (SE); ERIKSON, Fredrik, 221 86 Lund (SE)
(74) Representative: Tetra Pak - Patent Attorneys SE

(57) **Abstract**

A continuous in-line method for producing a packaging material web (100), comprising:
ink-jet printing (S10) a plurality of ink droplets (300) on a print surface (131) on the paperboard layer (130), the ink droplets (300) comprising color pigments and a solvent,
drying (S30) the plurality of ink droplets (300) printed onto the paperboard layer (130) such that the color pigments are immobilized, wherein drying (S30) is performed by:
evaporating (S31) at least some of the solvent by applying infrared radiation (IR) onto the print surface (131), and
absorbing (S32) infrared radiation (IR) transmitted through the paperboard layer (130) by an absorption surface (400) arranged on the opposite side of the paperboard layer (130), with regard to the print surface (131).

## Description

### Technical Field

The invention relates to a method for manufacturing a laminated packaging material web for liquid food packaging containers, a converting unit, and a laminated packaging material web.

### Background Art

Packaging containers of the single use disposable type for liquid foods are often produced from a laminated packaging material. The laminated packaging material is produced as a continuous web, which is either used in a roll-fed filling machine or cut into separate blanks for use in a blank-fed packaging machine.

The laminated packaging material is produced using a converting procedure in which multiple materials are joined and processed to form the ready-to-use web of laminated packaging material.

During the converting process a paperboard layer, forming the core layer of the laminated packaging material, may be digitally printed on the outside (i.e. the side intended as the exterior side of the laminated packaging material) for example by ink-jet printing, dried, and creased. Optionally, the paperboard layer may be pre-coated before the printing, and/or be bonded to one or more layers before or after the printing.

During the entire converting process it is important to maintain a desired moisture level of the paperboard layer; not only for ensuring optimum performance of various converting processes, but also to control the desired properties of the final packaging container.

A suggested technique for drying the paperboard layer after digital printing using water-based inks, such as pigmented water-based inks, is an infrared dryer in combination with a back reflector on opposite sides of the paperboard layer. The back reflector is located in a position where the reflector does not contact to the paperboard layer. While this technique allows for a fast drying, it has been observed that it will also dry the paperboard layer, i.e. the moisture content of the paperboard layer will be reduced. A low paperboard moisture content will affect the converting process negatively, for instance when the paperboard layer is creased later in the process. If the moisture content of the paperboard layer is reduced to a certain level, the paperboard layer will crack rather than bend, potentially reducing the quality of the final laminated packaging material web and the packaging containers produced from the laminated packaging material web. On the other hand, if the printed design is not sufficiently dried, it may result in defects related to scuffing or smearing of the printed color pattern. Thus, there is a need in the art for improvements of manufacturing techniques for laminated packaging material webs, especially with regards to ink drying.

### Summary

It is an object of the invention to at least partly overcome one or more of the above-identified limitations of the prior art. In particular, it is an object to provide a reliable and efficient method for manufacturing a laminated packaging material web with a maintained moisture level of the paperboard layer.

To solve these objects a continuous in-line method for manufacturing a laminated packaging material web is provided. The method comprises ink-jet printing a plurality of ink droplets on a print surface on a paperboard layer, the ink droplets comprising color pigments and a solvent, and drying the plurality of ink droplets printed onto the paperboard layer such that the color pigments are immobilized. The drying is performed by evaporating at least some of the solvent by applying infrared radiation onto the print surface on the paperboard layer, and absorbing infrared radiation transmitted through the paperboard layer by an absorption surface arranged on the opposite side of the paperboard layer, with regard to the print surface and also absorb the infrared radiation that is directly hitting the absorption surface outside the paperboard layer to minimize the secondary reflection to the opposite side of the paperboard layer.

The highly probable paperboard layer is one used for a liquid food packaging. In other words, the highly probable laminated packaging material web is a laminated liquid food packaging material web, alternatively named as liquid packaging board.

The method is advantageous in that the moisture content of the paperboard layer is substantially maintained. The moisture content of the paperboard layer may for instance be 4% or more, between 5% and 10%, or preferably between 5% and 8.5%.

The method may further comprise flexographic printing, or other printing techniques, and the print surface may hence be printed using ink-jet printing only, or by a hybrid approach combining two or more printing techniques. In other words, the print surface may be ink-jet printed and flexography printed.

The method may further comprise applying a print substrate layer to said paperboard layer to provide the print surface prior to ink-jet printing thereon.

Applying a print substrate layer may for instance comprise coating the paperboard layer with a pre-coating, or priming the paperboard layer by a plasma treatment to form a print substrate layer on a surface of the paperboard layer, and/or applying a surface conditioner, thereby changing the topology or properties relating to static electricity. The print substrate layer may fully cover the paperboard layer, it may cover only the areas to be covered by the print surface, or it may cover an intermediately sized area of the paperboard layer.

In an embodiment, the invention may be more beneficial when the paperboard layer needs to be dried as quick as possible. For instance, if the paperboard has a print substrate layer that avoids migration of the solvent of the ink, which is most likely water-based ink, by the paperboard, then drying as quick as possible without over drying the packaging material may be more beneficial. In other words, if the paperboard has a print substrate layer that can keep almost all solvent of the ink, which is most likely water-based ink, printed on the print substrate layer, then drying as quick as possible without over drying the packaging material may be more beneficial.

In an embodiment, the paperboard may comprise a printable coating, for instance a white pigment and clay-coating as the print substrate layer. Such a clay coating will form a water repellant surface on the paperboard layer meaning that the solvent of the ink cannot migrate be absorbed into the paperboard fibrous layer. This requires an increased drying power, as it is important to dry the ink fast before being subjected to further downstream processes.

In an embodiment, the print substrate layer may be a clay-coating that is also primed before ink-jet printing.

In an embodiment, the print substrate layer may be provided on the paperboard layer before the ink-jet printing on the same production site; and/or well before, for example in another production site, so on the site, where the ink-jet printing is realized, no application of the print substrate layer is realized.

Preferably, the paperboard layer has a thickness of minimum 90 µm, and/or a weight of minimum 65 gram per square meter.

The paperboard layer may be a uncoated paperboard, or a paperboard laminated with one or more layers, for example polymer layers, before ink-jet printing and/or application of the print substrate layer.

The absorption surface may be provided with a black color configured to absorb infrared radiation. However, it may be also another color or transparent. The absorption surface may be provided with a treatment to form a high absorption body, for instance a black body. By high absorption, it is implied that the surface has a very low reflectance in a wavelength spectrum of 0.4 µm - 4 µm. Examples of such treatment, as described further in the following detailed description, provides improved absorption.

The absorption surface may have a morphology that gives a very low reflectance, particularly in the wavelength spectrum of 0.4 µm - 4 µm.

The absorption surface may be supported by a plate on a primary side. The plate may comprise a material with high thermal conductivity, and act as a heat exchanger. The method may further comprise removing heat from the absorption surface via a cooling medium such as gas or liquid, the medium preferably acting on the opposite side of the plate with regard to the absorption surface. The plate on a secondary side may comprise an increased surface area by for instance the provision of fins, and thereby have increased heat transfer abilities.

The method may further comprise providing a crease line pattern to the paperboard layer. The crease line pattern may be repeated in a machine direction. The paperboard layer may be transported along the machine direction at a substantially constant speed, for example on 200 m/min or faster.

In a possible embodiment, a crease line may be provided upstream and/or downstream of ink-jet printing.

The steps of ink-jet printing, drying, and providing a crease line may be sequential and performed in that order.

The step of drying may further comprise applying hot air to the print surface. This is beneficial as it facilitates a maintained moisture content at a minimized drying time.

The hot air may be applied after the infrared radiation. By this, time efficiency of the method is ensured while still ensuring a desired level of moisture content in the paperboard layer.

The method may further comprise determining an adjusted drying power based on a determined moisture parameter, the determined moisture parameter being indicative of the paperboard moisture content, and the infrared radiation and/or hot air may be applied at the adjusted drying power. By this, an efficient way to maintain the moisture level of the paperboard layer is ensured.

The adjusted drying power may be determined separately for the infrared radiation and the hot air, such that the infrared radiation and the hot air are applied at a ratio based on the determined moisture parameter. Hence, efficiency of the process may be increased even more.

The infrared radiation may have a spectral emission within 0.4 µm - 4 µm. Thus, the infrared radiation may be a near-infrared radiation, a short-wave infrared radiation, a mid-wave infrared radiation, or a radiation in several infrared regions. The absorption surface may be configured to absorb radiation within the same range 0.4 µm - 4 µm.

In one embodiment, after evaporating at least some of the solvent by applying infrared radiation onto the print surface, rolling the printed packaging material onto a roller may be performed. If a crease line pattern is provided to said paperboard layer, then rolling the printed and creased packaging material onto a roller may be performed. Thus, a rolled packaging material web may be transported in a facilitated manner to a further step, like filling a product inside the packaging material web, probably a liquid food.

The order of method steps may be not limiting for the invention. Various order of the mentioned steps may be used by the skilled person as long as being technically possible to achieve the advantage of maintaining substantially the moisture content of the paperboard layer.

Another aspect of the invention refers to a converting unit configured to manufacture a laminated packaging material web. The converting unit may be configured to perform the continuous in-line method for manufacturing a laminated packaging material web described herein and therefore implies all aspects disclosed with regard to that method.

The converting unit comprises a feeding unit configured to continuously forward a paperboard layer, an ink-jet printer configured to print a plurality of ink droplets comprising color pigments and a solvent on a print surface on the paperboard layer, a drying station configured to dry the ink by exposing the print surface on the paperboard layer to infrared radiation, wherein the drying station further comprises an absorption surface arranged on the opposite side of the paperboard layer with regard to the print surface, the absorption surface being configured to absorb at least part of the infrared radiation transmitted through the paperboard layer. The feeding unit may be configured to forward the paperboard layer at a constant speed.

The converting unit may further comprise a sensor unit and a control unit operably connected to each other. The sensor unit may be configured to sense a moisture parameter indicative of the paper board moisture content and send a signal related to the moisture parameter to the control unit, and the control unit may be operably connected to the drying station and configured to adjust the drying power in response to the signal related to the moisture parameter. By this, time efficiency of the method is ensured, while minimizing moisture loss in the paperboard layer and/or ensuring a desired level of moisture content in the paperboard layer.

The drying station may be further configured to dry the plurality of ink droplets by exposing the paperboard layer to hot air. The drying station may comprise an impingement hot air dryer distinct from an infrared dryer, and the hot air dryer may be arranged downstream the infrared dryer. The benefits of combining infrared radiation with hot air are explained above.

The converting unit may further comprise a cooling unit configured to remove heat from the absorption surface.

The cooling unit may comprise a heat exchanger and/or cooling fins.

The converting unit may further comprise a creasing station configured to provide a crease line pattern to the paperboard layer, and/or a lamination station configured to laminate a further layer to the printed paperboard layer.

It is possible to have the creasing station downstream or upstream of the ink-jet printer; or to have more than one creasing stations located on both downstream and upstream of the ink-jet printer; or having a combined unit for the ink-jet printer and the creasing station that allows creasing before and/or after the printing.

The converting unit may further comprise a print substrate station configured to apply a print substrate layer to prepare the paperboard layer before being printed by the ink-jet printer. As mentioned above, applying a print substrate layer may comprise coating the paperboard layer with a pre- coating, for instance a clay coating or a primed clay coating, or priming the paperboard layer by a plasma treatment to form the print substrate layer on the surface of the paperboard layer, or applying a surface conditioner, or in other ways modify the properties of a surface of the paperboard layer. The converting unit may further comprise a second drying station for drying the print substrate layer.

The order of stations steps may be not limiting for the invention. Various order of the mentioned stations may be used by the skilled person as long as being technically possible to achieve the advantage of maintaining substantially the moisture content of the paperboard layer.

In one embodiment, after evaporating at least some of the solvent by applying infrared radiation onto the print surface, a rolling unit to roll the printed packaging material onto a roller may be provided. If a crease line pattern is provided to said paperboard layer, then rolling the printed and creased packaging material onto a roller may be performed. Thus, a rolled packaging material web may be transported in a facilitated manner to a further step, like filling a product inside the packaging material web, probably a liquid food.

Another aspect of the invention refers to a laminated packaging material web. The laminated packaging material web may be obtained from the converting unit and/or by the method steps described herein. The laminated packaging material web comprises an ink-jet printed paperboard layer. The moisture content of the paperboard layer is 4% or more. The moisture content of the paperboard layer may be between 5% and 10%. More preferably, the moisture content may be between 5% and 8.5%.

As an example, the moisture content of the paperboard layer may be between 6% and 8.5% after ink-jet printing the print surface, and in the final laminated packaging material web, the moisture content of the paperboard layer may be substantially the same, or slightly lower. This implies that the paperboard layer has not suffered any significant moisture loss, at least of a magnitude that would result in any major defects of the laminated packaging material web.

The laminated packaging material may have a crease line pattern and, for example, the crease line pattern may be cyclically repeated in a machine direction.

All possible features mentioned above should be assumed as valid for all aspects of the invention, as long as being under the scope of the claims.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a flow chart of a method for manufacturing a laminated packaging material web according to an embodiment.
Fig. 2 is a cross-sectional view of a laminated packaging material web and an absorption surface during manufacturing according to an embodiment.
Fig. 3 is a schematic view of a converting unit according to an embodiment.

### Detailed Description

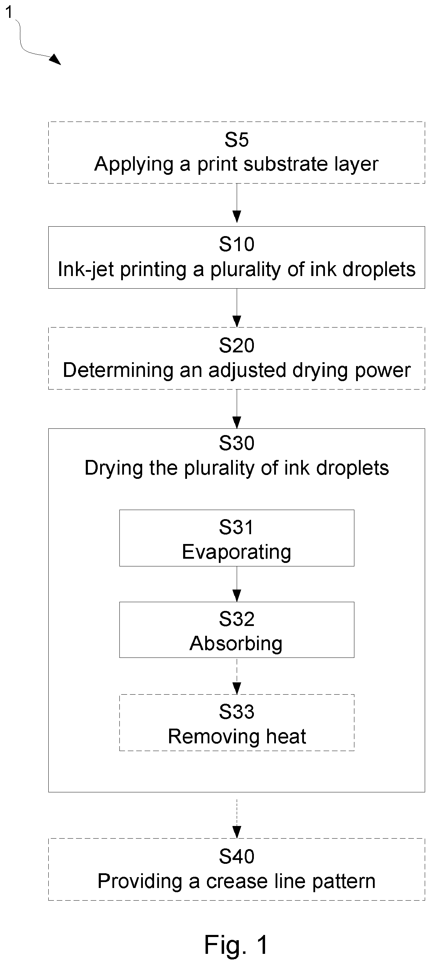

With reference to Fig. 1 an embodiment of a continuous in-line method 1 for manufacturing a laminated packaging material web 100 is illustrated. The method 1 comprises ink-jet printing S10 a plurality of ink droplets 300 on a print surface 131 on a paperboard layer 130, the ink droplets 300 comprising color pigments and a solvent. The paperboard layer 130 may comprise paper, paperboard or other cellulose-based material. Ink-jet printing is a type of digital printing or computer printing. During ink-jet printing, a digital image is recreated by propelling a plurality of ink droplets 300 onto a substrate, such as a paperboard layer 130 or a print substrate layer 140 which will be further discussed herein. The plurality of ink droplets may comprise a solvent and color pigments or dyes. The solvent may comprise water, nonvolatile organic content and/or volatile organic content, for instance alcohols with high boiling point. The method may further comprise other printing techniques, such as flexographic printing, and the print surface 131 may hence be printed by ink-jet printing S10 only, or by a hybrid approach combining two or more printing techniques. In other words, the paperboard layer 130 may be ink-jet printed and flexography printed. Ink used for ink-jet printing S10 may comprise a higher ratio of solvent relative color pigment than ink used for flexographic printing. For instance, ink-jet ink may comprise approximately 4 times more solvent content than flexographic ink. Further, the total amount of ink laid down on the paperboard later 130 is typically several times more for ink-jet printing as compared to flexographic printing. Hence, for ink-jet printing it is even more important to provide a fast drying process that does not reduce the moisture content of the paperboard layer 130. As mentioned above, the method may further comprise applying a print substrate layer 140 S5 to said paperboard layer prior to ink-jet printing the print surface.

The method further comprises drying S30 the plurality of ink droplets 300 printed onto the print surface 131 such that the color pigments are immobilized. The drying S30 is performed by evaporating S31 at least some of the solvent by applying infrared radiation IR onto the print surface 131 on the paperboard layer 130, and absorbing S32 infrared radiation IR transmitted through the paperboard layer 130 by an absorption surface 400 arranged on the opposite side of the paperboard layer 130, with regard to the print surface 131. During infrared drying, the infrared radiation, hereinafter IR, radiates onto the print surface 131, where it to some extent will be absorbed by molecules within the plurality of ink droplets 300, causing solvent of the ink droplets 300 to evaporate from the paperboard layer 130. The intensity of the IR affects the level of transmission through the paperboard layer 130 and may be adjusted. By the drying step S30 comprising evaporating S31 by IR, a more reliable process is ensured, which is unaffected by an air boundary layer. Infrared drying further facilitates a more time efficient process, as the spectral energy transfer process is very efficient. The rapid removal of solvent from the plurality of ink droplets may further create a brighter and more vibrant print on the print surface 131.

The drying process may be controlled by selecting the wavelength, intensity, and exposure time of the IR radiation. Ideally, the IR radiation should be selected such that a minimum amount of energy is transmitted to the paperboard layer 130 and absorbed by its water molecules, thereby reducing the moisture content loss of the paperboard layer 130.

Additionally, hot air HA may be applied to the print surface 131, before, during, or preferably after the infrared radiation IR. By applying hot air HA, it is meant that ambient air is heated and the heat is transferred from the flow of hot air to the print surface 131 by convection, and evaporated solvent from the plurality of ink droplets is transported to the air also by convection. The temperature and flow of hot air HA may be controlled. A drying process exclusively based on hot air would be inefficient and time consuming, hence it requires a long installation length to achieve required drying time, and significantly lowering the yield of a manufacturing process. A combination of IR and hot air HA for the step of drying S30 may be preferred.

Drying S30 the plurality of ink droplets 300 may be performed by exposing an area of the print surface 131 to infrared radiation IR, and subsequently exposing the same area of the print surface 131 to the flow of hot air HA. Alternatively, a first area of the print surface 131 may first be exposed to IR, and a second area of the print surface 131, larger than, and at least partly comprising the first area, may then be exposed to the flow of hot air HA. This means that IR radiation may only be provided locally to certain areas of the paperboard layer 130.

It is critical to dry the print surface 131 before carrying out further method steps to manufacture the laminated packaging material web 100, not least to avoid defects resulting from scuffing or smearing. A conventional approach is to use a back reflector located on the opposite side of the paperboard layer 130 with regard to the surface 131 onto which IR is applied. The back reflector in this case will reflect most of the incoming IR which in turn will radiate back through the paperboard layer 130, and evaporating S31 even more of the solvent. A drying process comprising reflection of IR by a back reflector may however suffer from drawbacks relating to the reduction of moisture content in the printed paperboard layer 130. High radiation intensity going through the paperboard layer 130 does not only remove moisture from the plurality of ink on the print surface 131, but also from the cellulose-based paperboard layer 130, and may result in a variety of issues regarding performance of the laminated packaging material web 100. A laminated packaging material web 100 comprising a paperboard layer 130 with a reduced moisture content may suffer from problems relating to cracks especially in areas where multiple crease lines intersect, and delamination of the laminated packaging material 100, as well as relating to the integrity of the final packaging container.

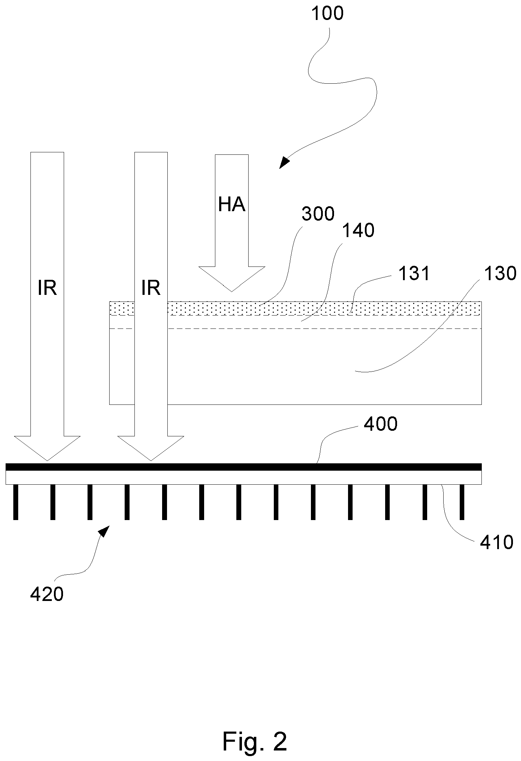

As illustrated in Fig. 2, the method according to the present invention instead comprises absorbing IR by an absorption surface 400. Hence, instead of reflecting IR back through the paperboard layer 130, a majority of the transmitted radiation is absorbed by the absorption surface 400. Providing an absorption surface 400 has proven to be a simple an inexpensive way to protect the paperboard layer 130 from substantial moisture loss.

The IR may have a spectral emission within 0.4 µm - 4 µm, and the absorption surface 400 may be configured to absorb radiation within the same range. For instance, less than 1% of light within a certain range may be reflected. Preferably, less than 0.5% of radiation with a wavelength within the range 0.4 µm - 4 µm will be reflected by the absorption surface 400. The absorption surface 400 may be provided with black color, another color, or be transparent. The absorption surface 400 may further have a morphology that gives a very low reflectance in the wavelength spectrum of 0.4 µm - 4 µm.

The absorption surface 400 may be provided with a treatment to form a high absorption body. The treatment may comprise chemical modification of the absorption surface 400, and/or deposition of titanium nitride or an oxide such as tungsten oxide, indium tin oxide, or antimony tin oxide. The oxide may be doped or undoped. The treatment may additionally or alternatively comprise coating, glazing, painting, or applying a film, polymeric plate, and/or metallic layer. Such a treatment may comprise using particles, powder, nanoparticles or other structures on the nanoscale, such as for instance carbon nanotubes. Several surface layers may be stacked on the absorption surface 400.

As further illustrated in Fig. 2, the absorption surface 400 may be supported by a plate 410, meaning that a plate 410 may be coated, treated, painted etc, and the absorption surface 400 may be defined as the coating, or treated/painted surface of the plate. The plate 410 may comprise a material with high thermal conductivity, such as for instance aluminum ore. The plate 410 may act as a heat exchanger.

The method as illustrated in Fig. 1 may further comprise removing heat S33 from the absorption surface. The step of removing heat S33 may be carried out by a cooling medium such as gas or liquid, the medium preferably acting on the opposite side of the plate with regard to the absorption surface. The plate 410 may comprise an increased surface area by for instance comprising fins 420, and thereby have increased heat transfer abilities. The plate 410 may be arranged adjacent to, or correspond to at least part of, a cooling unit 270 as further described below.

The method may further comprise determining S20 an adjusted drying power based on a determined moisture parameter, the determined moisture parameter being indicative of the paperboard 130 moisture content, and the infrared radiation IR alone, or both the infrared radiation IR and hot air HA may be applied at the adjusted drying power. The moisture parameter may be obtained by a sensor adjacent to the paperboard layer 130. The sensor may be a thermal sensor, such as a pyrometer and the moisture parameter may be indicative of the paperboard 130 moisture content by relating to a temperature of the paperboard layer 130. The temperature may be obtained from the print surface 131, from the opposite side of the paperboard layer 130, or from an area in between. Preferably, the temperature is obtained from an area of the paperboard layer 130 not directly exposed to IR or hot air HA during the measurement. The adjusted drying power may be determined so as to keep a desired temperature of the paperboard layer 130 within a certain range. For instance, the desired paperboard temperature may be below 65°C, below 60°C or, preferably around 55°C - 56°C.

The adjusted drying power may be determined separately for the infrared radiation IR and the hot air HA, such that the infrared radiation IR and hot air HA are applied at a ratio based on the determined moisture parameter. For instance, the ratio between the IR and hot air HA may be determined by minimizing the amount of infrared radiation IR while still ensuring complete drying within a desired drying time, while maintaining a desired moisture parameter, and thereby paperboard 130 moisture content. The desired drying time may be defined as the total time during which the paperboard layer 130 is arranged at a certain part of a production line, such as a drying station 230 or a section extending between the inkjet printing location and further converting equipment arranged downstream the drying station.

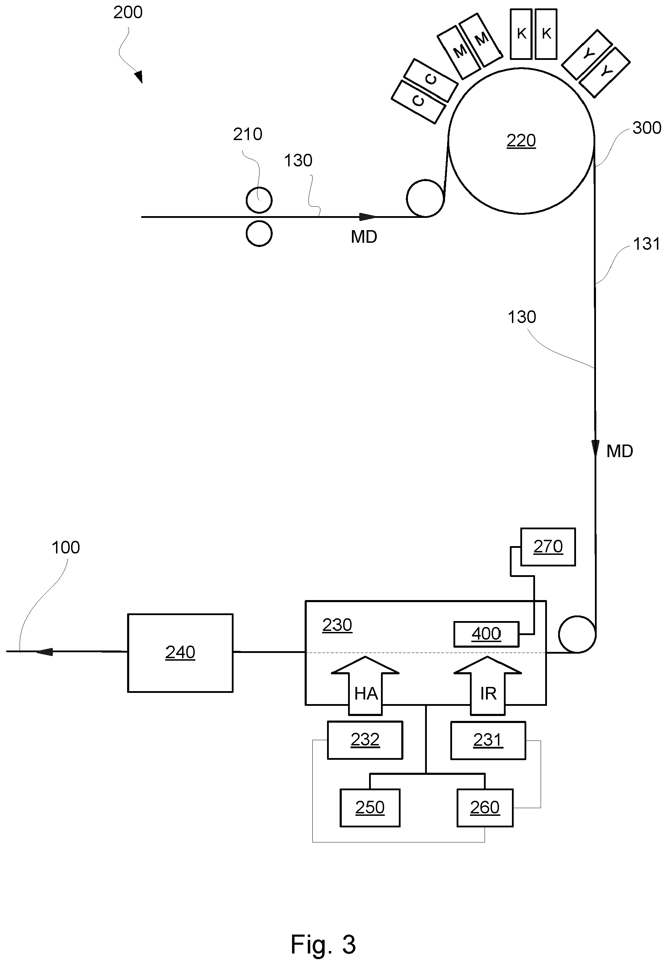

As can be seen in Fig. 1, the method may further comprise providing S40 a crease line pattern to the paperboard layer 130, preferably after the step of printing S10 and drying S30. The crease line pattern facilitates the formation of a packaging container from the laminated packaging material web 100, not illustrated. The crease line pattern may be repeated in a machine direction. The machine direction may be defined as the direction parallel to the movement of the paperboard layer 130 through a manufacturing equipment such as a converting unit 200, or as the circumferential direction of a roll of paper used for providing the paperboard layer 130. The laminate packaging material web 100 may have a machine direction, and a transverse direction, defined in perpendicular direction to the machine direction. The dimension of the laminate packaging material web in the machine direction may be substantially larger than in the transverse direction. During the method, the paperboard layer 130 may be transported along the machine direction as defined above at a substantially constant speed. An example path of the paperboard layer 130 through a converting unit 200 is illustrated in Fig. 3 as a continuous line with arrowheads pointing in the machine direction.

Although not illustrated, the method may further comprise laminating at least a further layer to the printed and creased paperboard layer 130. The laminated packaging material web 100 may for instance comprises two sealable layers arranged on the outside of the laminated packaging material web 100, corresponding to the print surface 131 on the paperboard layer 130, to constitute the outside or exterior of a packaging container formed from the laminated packaging material web 100, and the inside of the laminated packaging material web 100, to be in direct contact with a filled food product in the packaging container. The sealable layers are preferably liquid tight. The sealable layers may be heat sealable or comprise a thermoplastic material. Further, a barrier layer may be laminated to the paperboard layer 130, preferably on the opposite side as the print surface 131. The barrier layer may comprise any barrier material that is suitable to maintain a food safe environment for the packaged liquid food product. This covers metals, such as aluminium foil, polymer materials, such as ethylene vinyl alcohol copolymers, EVOH, or polyamides, PA, polysaccharides such as starch or fibrillar or crystalline cellulose, polymer--based film substrates being provided with a barrier coating; the barrier coating being selected from metals, metal oxides, inorganic oxides, other inorganic compounds or carbon-based coatings, such as amorphous diamond-like carbon, DLC, coatings. The barrier layer may be a cellulose based material and/or a composite material or multilayer coating material, for example comprising a non-metal material such as plastic, paper or cellulose-based material and a metal material for instance comprising Aluminum.

As previously mentioned, a print substrate layer 140 may be arranged S5 between the paperboard layer 130 and the print surface 131 on the paperboard layer 130 before the step of ink-jet printing S10. Applying a print substrate layer 140 S5 may for instance comprise coating the paperboard layer 130with a pre-coating, priming the paperboard layer 130 by a plasma treatment, flame treatment, corona treatment or applying a surface conditioner, thereby conditioning the surface, for instance like, changing the topology, surface tension, wettability, properties relating to static electricity, or other surface properties. In specific embodiments, the print substrate layer may be a clay coating or a primed clay coating, for instance, to change surface properties of the paperboard. Typically, the clay coating will form a water repellant surface on the print surface 131 meaning that the solvent of the plurality of ink droplets cannot migrate into the paperboard layer 130. This requires an increased drying power, as it is important to dry the ink droplets 300 fast before being subjected to further downstream processes. The print substrate layer may comprise a polymer film or a metalized polymer film. These alternatives also form a water repellant surface on the paperboard layer meaning that the solvent of the ink cannot migrate into the paperboard layer. This requires an increased drying power, as it is important to dry the ink fast before being subjected to further downstream processes. The print substrate layer may fully cover the paperboard layer 130, it may cover only the areas to be covered by the plurality of ink droplets 300, or it may cover in intermediately sized area of the paperboard layer 130. The method may further comprise drying, if needed, the print substrate layer prior to printing the print surface 131. In particular, if the print substrate layer comprises some kind of coating such drying may comprise exposing the print substrate layer to IR.

Although not explicitly illustrated in Fig. 2, the paperboard layer 130 of the laminated packaging material web 100 will after the method of Fig. 1 have a moisture content of 4% or more, between 5% and 10%, or, preferably, between 5% and 8.5%. The moisture content of the paperboard layer 130 may, after the method described above, not be significantly lower than the moisture content provided before the steps of the method is carried out. As an example, the provided moisture content of the paperboard layer 130 may be between 6% and 8.5% before the step of drying S30 the print surface 131. This implies that the paperboard layer 130 of the laminated packaging material web 100 has not suffered moisture losses of a magnitude that would result in any defects of the paperboard layer 130, and that quality of the final product is ensured.

Turning now to Fig. 3, a converting unit 200 configured to manufacture a laminated packaging material web 100 is illustrated in a schematic view. The converting unit 200 may be configured to perform the method 1 as described above with reference to Fig. 1 and all aspects disclosed with regard to the method 1 may be implied also for the converting unit 200, as well as the other way around. The converting unit 200 comprises a feeding unit 210 configured to continuously forward a paperboard layer 130, preferably at a constant speed and/or in the machine direction as defined above. The converting unit 200 further comprises an ink-jet printer 220 configured to print a plurality of ink droplets 300 comprising color pigments and a solvent on a print surface 131 on the paperboard layer 130. The ink-jet printer 220 is in the figure illustrated as a support cylinder and a plurality of printer heads for cyan C, magenta M, yellow Y and black K. It should be noted that the exact configuration of the ink-jet printer 220 may be different depending on the particular application; for example, the ink-jet printer 220 may comprise multiple printer heads arranged in the machine direction and/or the transverse direction in order to cover the entire width of the paperboard layer 130. The converting unit 200 may also comprise a print substrate station not shown, with reference to the method 1 explained before, before the ink-jet printer 220.

The converting unit 200 further comprises a drying station 230 configured to dry the ink 300 by exposing the print surface 131 on the paperboard layer 130 to infrared radiation IR. The drying station 230 may further be configured to dry the plurality of ink droplets 300 by exposing the paperboard layer 130 to hot air HA. The drying station 230 may comprise a hot air dryer 232 distinct from an infrared dryer 231, and the hot air dryer 232 may be arranged downstream the infrared dryer 231.

The infrared dryer 231 may be arranged to extend in the transverse direction, and across the paperboard layer 130. The infrared dryer 231 may comprise a plurality of dryers. A control unit 260 may be programmed to control the operation of the individual dryers.

The drying station 230 further comprises an absorption surface 400 arranged on the opposite side of the paperboard layer 130 with regard to the print surface 131, the absorption surface 400 being configured to absorb at least part of the infrared radiation IR transmitted through the paperboard layer 130 and, as can be seen in Fig. 2, also absorb the IR that is directly hitting the absorption surface 400 outside the paperboard layer 130 to minimize the secondary reflection to the opposite side of the paperboard layer 130, with regard to the print surface 131. The drying station 230 may further comprise an emitter reflector, located on the opposite side of the infrared dryer 231 with regard to the paperboard layer 130.

The converting unit 200 may further comprise a cooling unit 270 configured to remove heat from the absorption surface 400. The cooling unit 270 may comprise a heat exchanger and/or cooling fins 420 (see Fig. 2). The cooling unit 270 may be in connection to, comprise, or be synonymous with the plate 410 as illustrated in Fig. 2. The cooling unit 270 may comprise coated ore on top of for example aluminum ore or any other material with high thermal conductivity, which may act as a heat exchanger, and air or other media such as gas or liquid may be used to dissipate heat from the absorption surface 400. The cooling unit 270 may comprise cooling fins 420, i.e. an increased absorption surface area going into another material (such as the plate 410), and thereby having increased heat transfer abilities.

The converting unit 200 may further comprise a creasing station 240 configured to provide a crease line pattern to the paperboard layer 130, and/or at least one lamination station configured to laminate at least a further layer to the paperboard layer 130.

The converting unit 200 may further comprise a sensor unit 250 being operably connected to the control unit 260, and the sensor unit 250 may be configured to sense a moisture parameter indicative of the paper board 130 moisture content and send a signal related to the moisture parameter to the control unit 260. The control unit 260, being operably connected to the drying station 230, may be configured to adjust the drying power in response to the signal related to the moisture parameter. In particular the control unit 260 is configured to control the power of the infrared dryer 231 based on the output from the sensor 250.

In one embodiment, the sensor unit 250 is configured to measure the surface temperature of the paper board 130 (preferably at the print surface 131). The surface temperature is then controlled by means of the control unit 260 not to exceed a predetermined threshold, thereby indirectly also controlling the moisture content of the paper board 130.

From the description above follows that, although various embodiments of the invention have been described and shown, the invention is not restricted thereto, but may also be embodied in other ways within the scope of the subject-matter defined in the following claims.

## Claims

1. A continuous in-line method for producing a packaging material web (100), comprising:
ink-jet printing (S10) a plurality of ink droplets (300) on a print surface (131) on a paperboard layer (130), the ink droplets (300) comprising color pigments and a solvent,
drying (S30) the plurality of ink droplets (300) printed onto the paperboard layer (130) such that the color pigments are immobilized, wherein drying (S30) is performed by:
evaporating (S31) at least some of the solvent by applying infrared radiation (IR) onto the print surface (131), and
absorbing (S32) infrared radiation (IR) transmitted through the paperboard layer (130) by an absorption surface (400) arranged on the opposite side of the paperboard layer (130), with regard to the print surface (131).

2. The method according to claim 1, wherein the absorption surface (400) is provided with a treatment to form a high absorption body.

3. The method according to any preceding claim, the method further comprising providing (S40) a crease line pattern to the paperboard layer (130).

4. The method according to claim 3, wherein the steps of ink-jet printing (S10), drying (S30), and providing (S40) a crease line are sequential and performed in that order.

5. The method according to any preceding claim, wherein drying (S30) further comprises applying hot air (HA) to the print surface (131).

6. The method according to claim 5, wherein the hot air (HA) is applied after the infrared radiation (IR).

7. The method according to any preceding claim, further comprising determining (S20) an adjusted drying power based on a determined moisture parameter, the determined moisture parameter being indicative of the paperboard (130) moisture content, and wherein the infrared radiation (IR) and/or hot air (HA) are applied at the adjusted drying power.

8. The method according to claim 7 when dependent on claim 5 or 6, wherein the adjusted drying power is determined separately for the infrared radiation (IR) and the hot air (HA), such that the infrared radiation (IR) and hot air (HA) are applied at a ratio based on the determined moisture parameter.

9. The method according to any of the preceding claims, wherein the infrared radiation (IR) has a spectral emission within 0.4 µm - 4 µm, and wherein the absorption surface (400) is configured to absorb radiation within the same range.

10. The method according to any preceding claim, further comprising removing heat (S33) from the absorption surface (400).

11. A converting unit (200) configured to continuously manufacture a laminated packaging material web (100), comprising a feeding unit (210) configured to continuously forward a paperboard layer (130), an ink-jet printer (220) configured to print a plurality of ink droplets (300) comprising color pigments and a solvent on a print surface (131) on the paperboard layer (130), a drying station (230) configured to dry the ink (300) by exposing the print surface (131) to infrared radiation (IR), wherein the drying station (230) further comprises an absorption surface (400) arranged on the opposite side of the paperboard layer (130) with regard to the print surface (131), the absorption surface (400) being configured to absorb at least part of the infrared radiation (IR) transmitted through the paperboard layer (130).

12. The converting unit (200) according to claim 11, further comprising a sensor unit (250) and a control unit (260) operably connected to each other, wherein the sensor unit (250) is configured to sense a moisture parameter indicative of the paper board (130) moisture content and send a signal related to the moisture parameter to the control unit (260), and wherein the control unit (260) is operably connected to the drying station (230) and configured to adjust the drying power in response to the signal related to the moisture parameter.

13. The converting unit (200) according to claim 11 or 12, wherein the drying station (230) is further configured to dry the plurality of ink droplets (300) by exposing the paperboard layer (130) to hot air (HA).

14. The converting unit (200) according to any of claims 11-13, further comprising a cooling unit (270) configured to remove heat from the absorption surface (400).

15. The converting unit (200) according to claim 14, wherein the cooling unit (270) comprises a heat exchanger and/or cooling fins.

16. The converting unit (200) according to any of claims 11-15, further comprising a creasing station (240) configured to provide a crease line pattern to the paperboard layer (130).
